Europäisches Patentamt

European Patent Office

Office européen des brevets

(11) Veröffentlichungsnummer: **0 222 082**
**A1**

## (12) EUROPÄISCHE PATENTANMELDUNG

(21) Anmeldenummer: 86111704.2

(22) Anmeldetag: 23.08.86

(51) Int. Cl.4: **F02B 37/00** , F02B 33/36

(30) Priorität: 31.10.85 DE 3538790

(43) Veröffentlichungstag der Anmeldung:
20.05.87 Patentblatt 87/21

(84) Benannte Vertragsstaaten:
DE FR GB IT SE

(71) Anmelder: MAN GUTEHOFFNUNGSHÜTTE GMBH
Bahnhofstrasse, 66 Postfach 11 02 40
D-4200 Oberhausen 11(DE)

(72) Erfinder: Kauder, Knut, Prof.Dr.-Ing.
Stuchteystrasse 25
D-4600 Dortmund 30(DE)
Erfinder: Woelk, Gerd-Ulrich, Dr.-Ing.
Pfalzgrafenstrasse 19B
D-4200 Oberhausen 11(DE)

(54) **Abgasschraubenlader.**

(57) Bei einem Abgaslader zur Aufladung von Verbrennungsmotoren wird ein Schraubenkompressor - (Schraubenlader) zur Aufladung eines Verbrennungsmotors durch einen Schraubenmotor angetrieben, der mit den Abgasen des Verbrennungsmotors betrieben wird.

Fig. 2

EP 0 222 082 A1

## "Abgasschraubenlader"

Die Abgasturboaufladung von Verbrennungsmotoren ist heute Stand der Technik.

Dennoch weisen Abgasturbolader (ATL) und mechanisch angetriebene Turbolader (TL) eine Reihe von Problemen auf:

-Die Betriebsgrenze ist durch die Pumpgrenze des Verdichters gegeben;

-sehr hohe Umfangsgeschwindigkeiten sind namentlich bei Radialrädern notwendig;

-bei kleineren Motorleistungen werden nur mäßige Wirkungsgrade vor allem im Teillastbereich erreicht;

-separate Ladeluftkühler bei höheren Ladedruckverhältnissen verteuern die Ladeeinheit und erhöhen das Bauvolumen;

-eine mit der Motordrehzahl steil ansteigende Betriebskennlinie, die sich bei Hochdruckaufladung und hohen Drehzahlen ungünstig auf das Drehmomentverhalten des Verbrennungsmotors auswirkt, kann nur mit aufwendigen Maßnahmen (Stoß-Aufladung, Abblasen von Abgasen oder Luft, Ladedruckregelung) verbessert werden.

Deshalb wird ein Abgasschraubenlader (ASL) vorgeschlagen, der solche Probleme nicht aufweist:

-Keine Pumpgrenze als Verdrängermaschine;

-niedrige Umfangsgeschwindigkeiten (15 ÷ 60 ms$^{-1}$);

-hohe Wirkungsgrade noch bei kleinen Motorleistungen;

-hohe Teillastwirkungsgrade;

-Verzicht auf Ladeluftkühler, bei "normalen" Ladedruckverhältnisse für sehr hohe Ladedruckverhältnisse (bei $\pi$ = 5) sind mäßige Kühlkapazitäten notwendig;

-eine mit der Motordrehzahl flach verlaufende Betriebskennlinie, die nur gering von der Motordrehzahl abhängt;

-hohes Beschleunigungsverhalten durch vergleichsweise kleines polares Massenträgheitsmoment.

Der Abgasschraubenlader besteht erfindungsgemäß aus einem Schraubenlader (SL) zur Aufladung des Verbrennungsmotors und einem direkt oder indirekt gekoppelten adiabaten Schraubenmotor (SM), der mit den Abgasen des Verbrennungsmotors betrieben wird.

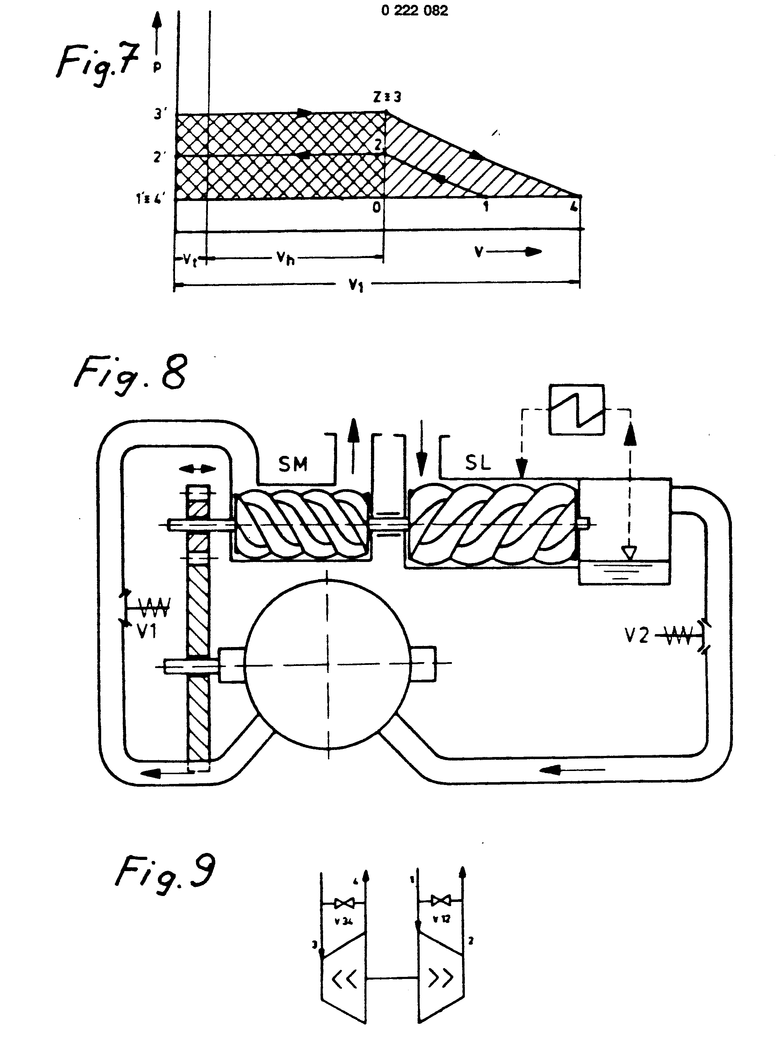

Der Schraubenlader, ein Schraubenverdichter mit vorzugsweise beschichteten Rotoren, kann trocken (adiabat) laufen. Mit Einspritzkühlung kann durch Änderung des Kühlfluidmassenstromes der mittlere Polytropenexponent den Betriebsbedingungen angepaßt werden, z.B. zur Erleichterung der Zündung. Als Einspritzflüssigkeit wird für Dieselmotoren Dieselkraftstoff gewählt, der so im Schraubenlader vorgewärmt, in den Motorbrennraum eingespritzt wird. Bei einem Laderdruckverhältnis von $\pi_L$ = 3,5 erreicht der adiabate Turboverdichter, je nach Wirkungsgrad und Eintrittstemperatur, Austrittstemperaturen von $t_2$ = 170 ÷ 220 °C. Am Austritt des Schraubenladers können bei gleichem Druckverhältnis Temperaturen von $t_2$ < 70 °C erreicht werden. Ein Ölkühler ist nur notwendig, wenn der Schraubenlader mit unbeschichteten Rotoren, quasi konventionell, betrieben werden soll. Je nach Schaltung des ASL können Anfahrventile und eine mechanische Trennung der gesamten Ladeeinheit vom Motor vorgesehen werden (Fig. 5, Fig. 8), um den Startvorgang zu erleichtern bzw. erst zu ermöglichen.

Der Schraubenmotor arbeitet trocken (beschichtet oder unbeschichtet). Ihm kann ein Bypassventil zur Umgehung des Expansionsvorganges beim Startvorgang des Verbrennungsmotors zugeordnet werden.

Zur Optimierung des Wirkungsgrades muß bei gegebener Motordrehzahl entweder der Rotordurchmesser oder die Rotordrehzahl durch eine zusätzliche Getriebstufe angepaßt werden.

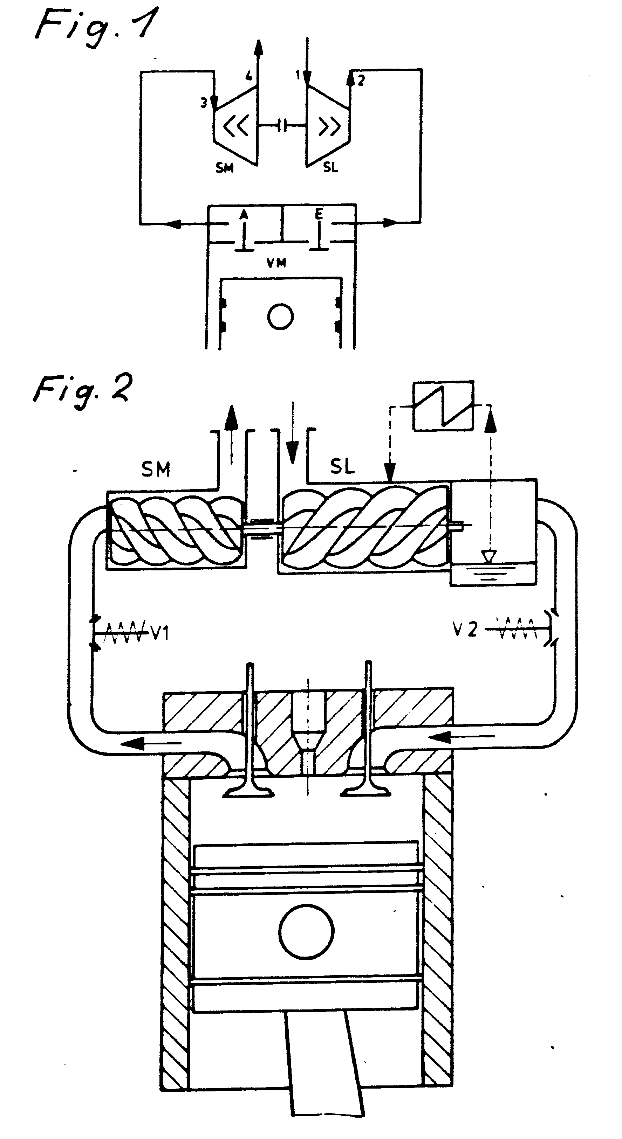

Fig. 1 zeigt die prinzipielle Schaltung. Darin bedeuten:

1 Eintritt in den Schraubenlader (SL)

2 Austritt aus dem Schraubenlader

3 Eintritt in den Schraubenmotor (SM)

4 Austritt aus dem Schraubenmotor

E Eintritt in den Verbrennungsmotor (VM)

A Austritt aus dem Verbrennungsmotor

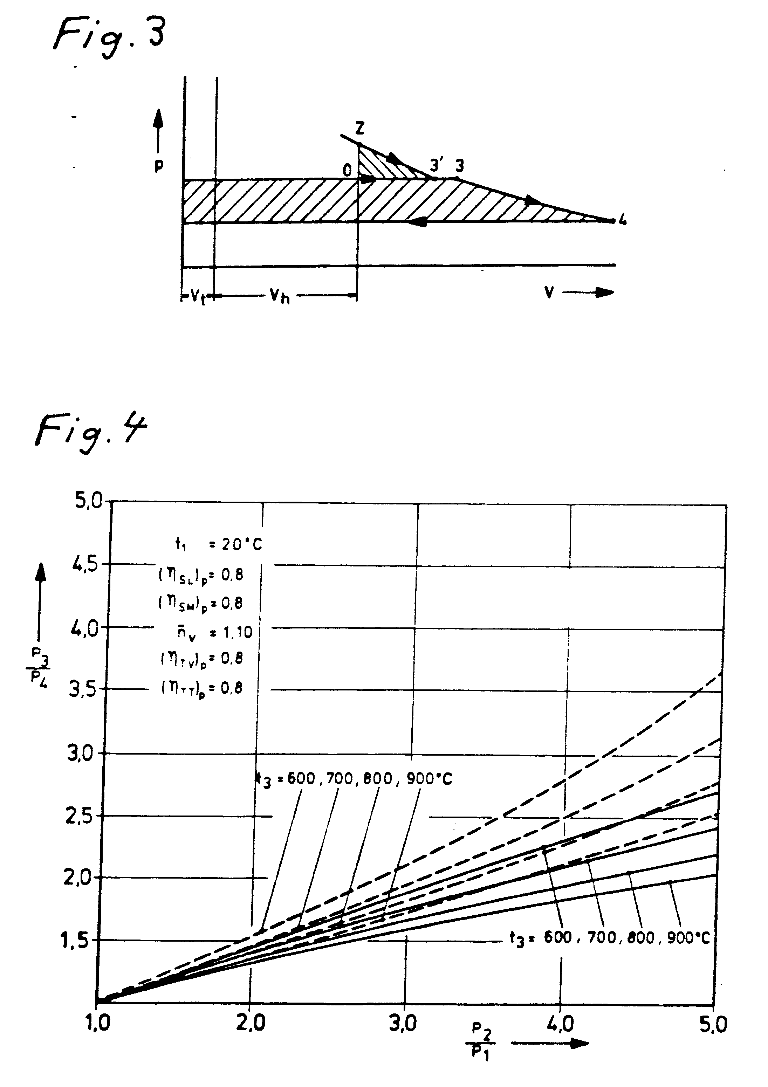

Es gibt verschiedene Ausführungsmöglichkeiten des Abgasschraubenladers. Beim freilaufenden Abgasschraubenlader (Fig. 2) besteht keine mechanische Kupplung des ASL mit dem VM. Motordrehzahl und Ladedruck sind nicht unmittelbar einander zugeordnet.

Wie bei der Fahrzeuggasturbine arbeitet der ASL als "Gaserzeuger", eine Nutzarbeit kann der Ladeeinheit, wie beim Abgasturbolader, nicht entnommen werden.

Der nunmehr höhere Verbrennungsmotor-Austrittsdruck $p_A$ verlangt größere Ventilüberschneidungen. Die Motorbetriebslinie wird bei abnehmender Drehzahl entsprechend der Verdrängercharakteristik des Laders auf relativ hohem Ladedruckniveau liegen. Das Beschleunigungsverhalten nimmt gegenüber anderen, im folgenden Text genannten Schaltungen ab, weil die Kopplung nur über das Arbeitsfluid eine zeitliche Phasenverschiebung bedingt. Für den Startvorgang werden die Anfahrventile 1 und 2 geöffnet, der Lader ist damit kurzgeschlossen. Steigt dann die Abgastemperatur, wird zunächst das Ventil 1 zur Beschleunigung der Ladeeinheit, danach das Ventil 2 zur Inbetriebnahme der Aufladung geschlossen. Der Ölkühler wird nur im konventionellen Laderbetrieb, d.h. ohne Kraftstoffeinspritzkühlung, benötigt.

In Fig. 3 ist die Arbeitsfläche eines abgasgetriebenen Schraubenmotors dargestellt.

Zuerst erfolgt die Expansion des Abgases vom Druck $P_z$ am Expansionspunkt im Zylinder auf den Eintrittdruck $P_3$ des Schraubenexpanders. Daran - schließt sich die Expansion im Schraubenmotor auf den Gegendruck $P_4$ an.

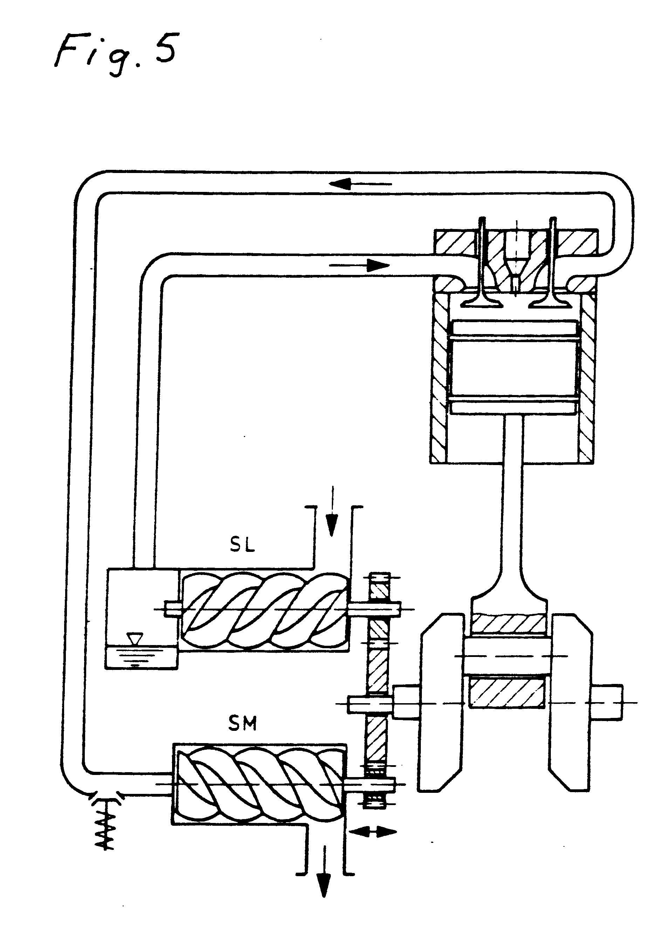

Fig. 4 kennzeichnet an Hand der Kurven des Abgasschraubenladers ( = durchgezogene Linie) und eines Abgasturboladers ( = gestrichelte Linie) den Verlauf des Expansionsdruckverhältnisses $P_3/P_4$ als Funktion des Verdichtungsdruckverhältnisses $P_2/P_1$ bei der Null-Nutzarbeit des ASL und des ATL. Parameter ist die Abgastemperatur bei Expansionsbeginn. So benötigt bei einer mittleren Abgastemperatur 700 °C der ATK ein Turbinendruckverhältnis von $P_3/P_4$ = 1,95, der ASL ein Schraubenmotordruckverhältnis von $P_3/P_4$ = 1,75.

Ein mechanisch gekuppelter Abgasschraubenlader ist in Fig. 5 dargestellt.

Beide Laderteile, SL und SM sind mechanisch mit der Motorkurbelwelle gekuppelt. Für den SM ist durch die Zähnezahl des Abtriebsritzels die Auslegungsumfangsgeschwindigkeit des SM direkt, ohne zusätzliche Getriebestufe zu erreichen.

Auch kann der Startvorgang ohne SL-Anfahrventil durchgeführt werden. Für den Startvorgang bestehen zwei Schaltungsmöglichkeiten:

1. Zum Erreichen eines genügend hohen SL-Druckverhältnisses und einer ausreichenden Abgastemperatur entnimmt der SM seine Startleistung der Verbrennungskurbelwelle.

2. Der SM wird vom Verbrennungsmotor mechanisch entkuppelt, die Abgase gelangen durch das SM-Anfahrventil (V2) in die Atmosphäre.

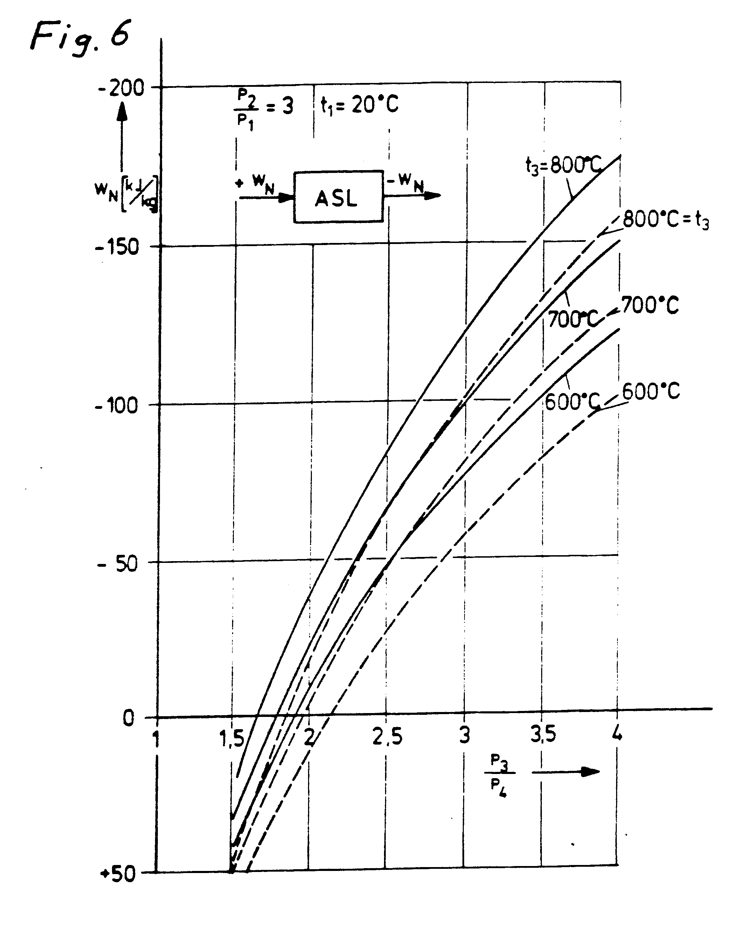

Fig. 6 verdeutlicht die Bedingungen, bei denen der ASL eine Nutzarbeit an den Verbrennungsmotor übertragen kann (Vorzeichenvereinbarung: dem ASL zugeführte spezifische Nutzarbeit wird positiv - ( + $w_N$), vom ASL abgegebene spezifische Nutzarbeit wird negativ (-$w_N$) gezählt!). Die Verhältnisse des freilaufenden ASL werden auf der Abszisse wiedergegeben.

Fig. 7 zeigt das idealisierte p-V-Diagramm des Ladungswechsels eines 4-Takt-Motors mit Aufstauen der Abgase bis zum Expansionsenddruck im Zylinder (z), d.h. $p_3 = p_z$.

Ein vollständiges Aufstauen der Abgase bis zum Expansionsenddruck liefert zwar einen theoretisch vollständigen Rückgewinn der Zwickelarbeit ($w_{RZ}$), $w_{RZ}$ = A (z, 4, 4', 3') -A (z, 0, 4', 3'),

wenn die Umsetzungswirkungsgrade mit 1 angenommen werden; der Motorzylinder leidet dann aber unter ungenügendem Ladungswechsel der Restgase.

Eine Variante zur obengenannten Schaltung, der mechanisch gekuppelte Schraubenmotor, ist in Fig. 8 angegeben. Hier bleibt der ASL als Einheit bestehen.

Eine zusätzliche Regelung ist durch die direkte Motordrehzahlabhängigkeit nicht notwendig.

Für den Startvorgang bestehen auch hier zwei Schaltungsmöglichkeiten:

1. Die gesamte Ladegruppe wird mechanisch vom Motor getrennt. Die geöffneten Anfahrventile V1 und V2 erlauben die "normalen" Ladungswechsel des Motors (Betrieb ohne Aufladung). Im Aufladebetrieb sind diese Ventile geschlossen und das Ritzel der Ladeeinheit mit dem Kurbelwellenzahnrad im Eingriff (schaltbarer Betrieb).

2. Bei nicht schaltbarem Betrieb muß der Verbrennungsmotor die Leerlaufleistung der Ladegruppe bereitstellen. Frischluft und Abgas durchströmen dann die beiden geöffneten Bypassventile V34 und V12 (Fig. 9).

## Ansprüche

1. Abgaslader zur Aufladung von Verbrennungsmotoren, dadurch gekennzeichnet, daß ein Schraubenkompressor (Schraubenlader) zur Aufladung eines Verbrennungsmotors durch einen Schraubenmotor angetrieben wird, der mit den Abgasen des Verbrennungsmotors betrieben wird.

2. Abgaslader nach Anspruch 1, dadurch gekennzeichnet, daß der Schraubenkompressor (Schraubenlader) innengekühlt ist.

3. Abgaslader nach Anspruch 2, dadurch gekennzeichnet, daß die Innenkühlung durch Einspritzen eines Fluids in den Schraubenkompressor - (Schraubenlader) erfolgt.

4. Abgaslader nach Anspruch 3, dadurch gekennzeichnet, daß als Einspritzfluid Kraftstoff verwendet wird.

5. Abgaslader nach Anspruch 4, dadurch gekennzeichnet, daß der eingespritzte Kraftstoff nach seiner Vorwärmung im Verdichtungsraum des Schraubenkompressors (Schraubenladers) dem Brennraum des Verbrennungsmotors zugeführt wird.

6. Abgaslader nach Anspruch 3 bis 5, dadurch gekennzeichnet, daß der mittlere Polytropenexponent der Verdichtung im Schraubenkompressor (Schraubenlader) duch Variation des Kühlfluidmassenstroms den Betriebsbedingungen des Verbrennungsmotors angepaßt werden kann.

7. Abgaslader nach Anspruch 1 bis 6,
dadurch gekennzeichnet,
daß zwischen Schraubenkompressor (Schraubenlader) und Schraubenmotor ein Getriebe angeordnet ist.

8. Abgaslader nach Anspruch 1 bis 7,
dadurch gekennzeichnet,
daß die Rotoren des Schraubenmotors beschichtet sind.

9. Abgaslader nach Anspruch 1 bis 8,
dadurch gekennzeichnet,
daß der Schraubenkompressor (Schraubenlader) mit dem Schraubenmotor freilaufend ausgeführt ist, d.h. nicht mit dem Verbrennungsmotor mechanisch gekuppelt ist.

10. Abgaslader nach Anspruch 1 bis 8,
dadurch gekennzeichnet,
daß der Abgasschraubenlader mechanisch mit der Welle des Verbrennungsmotors gekuppelt ist.

11. Abgaslader nach Anspruch 10,
dadurch gekennzeichnet,
daß die gesamte Ladergruppe beim Anfahren mechanisch vom Verbrennungsmotor getrennt wird und Schraubenkompressor (Schraubenlader) und Schraubenmotor über Anfahrventile umgangen werden.

12. Abgaslader nach den Ansprüchen 10 und 11,
dadurch gekennzeichnet,
daß zwischen dem Abgasschraubenlader und dem Verbrennungsmotor eine hydraulische Kupplung vorgesehen ist.

0 222 082

Fig. 1

Fig. 2

## Fig. 3

## Fig. 4

$t_1 = 20°C$

$(\eta_{SL})_p = 0.8$

$(\eta_{SM})_p = 0.8$

$\bar{n}_v = 1.10$

$(\eta_{TV})_p = 0.8$

$(\eta_{TT})_p = 0.8$

$t_3 = 600, 700, 800, 900°C$

$t_3 = 600, 700, 800, 900°C$

0 222 082

# Fig.5

SL

SM

Fig. 6

0 222 082

**Fig.7**

**Fig. 8**

**Fig.9**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 930 124 (WIESER)<br>* Seite 12, Zeile 13 - Seite 13, Zeile 20; Figur 1 * | 1 | F 02 B 37/00<br>F 02 B 33/36 |
| Y | | 2-5 | |
| A | | 10 | |
| | --- | | |
| Y | DE-A-2 814 919 (BAUER)<br>* Seite 8, Zeile 19 - Seite 9, Zeile 1; Seite 11, Zeile 14 - Seite 12, Zeile 14; Figur 1 * | 2,3 | |
| | --- | | |
| Y | DE-C- 698 476 (ARGUS)<br>* Seite 1, Zeilen 25-58; Figur * | 4,5 | RECHERCHIERTE SACHGEBIETE (Int. Cl.4) |
| | --- | | |
| A | FR-A-2 286 279 (HONDA)<br><br>* Seite 4, Zeile 4 - Seite 5, Zeile 35; Figuren 1,2 * | 1,4,5, 10 | F 02 B<br>F 04 C<br>F 01 C |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 09-02-1987 | HAKHVERDI M. |